# EUROPEAN PATENT APPLICATION

(11) **EP 3 028 889 A1**
(43) Date of publication of application: **08.06.2016**
(21) Application number: 14833102.8
(22) Date of filing: 28.03.2014
(51) Int. Cl.: B60K 20/02, B60R 25/06, F16H 63/34

(54) **CANCELLATION MECHANISM**

(30) Priority: 29.07.2013 JP 2013156461
(71) Applicant: HONDA LOCK MFG. CO., LTD., Sadowara-cho Miyazaki-shi Miyazaki 880-0293 (JP)
(72) Inventor: YUKIHARA, Jin, Miyazaki-shi Miyazaki 880-0293 (JP)
(74) Representative: Prechtel, Jörg
(86) International application number: PCT/JP2014/001831
(87) International publication number: WO 2015/015676

(57) **Abstract**

Provided is a simple cancellation mechanism achieving the size reduction and the reduced number of components. This cancellation mechanism includes body portions 21, 23 attached to a rotatable spindle and connected to an automatic transmission via the spindle; a rotary lever 22 attached to the body portions 21, 23 to rotate about the spindle and configured to rotate in response to input from a shift lever device; and an actuator 24 disposed on one of the rotary lever 22 and the body portions 21, 23 and configured to move between a coupling position at which the rotary lever 22 and the body portions 21, 23 are coupled together and a decoupling position at which coupling between the rotary lever 22 and each body portion 21, 23 is canceled.

## Description

### TECHNICAL FIELD

### <Cross-Reference>

This application claims priority to Japanese Patent Application No. 2013-156461 filed on July 29, 2013, the entire contents of which are incorporated by reference herein.

The present invention relates to a cancellation mechanism.

### BACKGROUND ART

A shift lever device configured to switch a range of an automatic transmission among a parking position (P), a drive position (D), and a reverse position (R) is mounted on a vehicle such as an automobile. The shift lever device includes, for example, a shift lever supported to tiltably move in a front-back direction, and an escutcheon cover covering the periphery of a base portion of the shift lever and having a guide groove formed along the direction where the shift lever is tilted.

The above-described shift lever device is configured to tiltably move the shift lever along the guide groove to perform shift change according to a tilt position.

Moreover, the above-described shift lever device is provided with, for example, a shift lock mechanism configured to stop (lock) the shift lever from tilting in an engine stop state. The shift lock mechanism is configured to allow, after engine start, tilting movement of the shift lever with a brake pedal being pushed and a pressing button of the shift lever being pressed.

In the case of applying great force to the shift lever, the shift lock mechanism might be damaged. In this case, the shift lever can tiltably move from the parking position to the drive position even in the engine stop state. Accordingly, a vehicle can be freely moved. Thus, the vehicle can be pushed and taken away (so-called "Push and Steal"), and this might lead to theft etc., for example. In particular, America and Canada, for example, have pursued the idea of abolishing the obligation of mounting an antitheft device such as a steering lock on an immobilizer-mounted vehicle. For this reason, it is considered that the above-described theft due to damage of the shift lock mechanism increasingly occurs.

Thus, Patent Literature 1 discloses, for example, a configuration in which a stopper for restricting tilting movement of a shift lever from a parking position is provided in a guide groove of an escutcheon cover.

### CITATION LIST

### PATENT LITERATURE

PATENT LITERATURE 1: JP-A-2003-226226

### SUMMARY OF THE INVENTION

### PROBLEM TO BE SOLVED BY THE INVENTION

However, in the above-described typical technique, the above-described stopper needs to be provided separately from the shift lever device. This might lead to a size increase and an increase in the number of components.

Moreover, it is required that the stopper is attached every time an engine is stopped and that the stopper is detached every time the engine is started. For this reason, the attachment/detachment operation is complicated.

An object of the present invention is to provide a simple cancellation mechanism achieving a size reduction and the reduced number of components.

### SOLUTION TO THE PROBLEMS

A cancellation mechanism of the present invention employs the following configuration.
(1) A cancellation mechanism includes: a body portion attached to a rotatable spindle and connected to an output device via the spindle; a rotary lever attached to the body portion to be rotatable about the spindle and configured to rotate in response to input from an input device; and an actuator disposed on either one of the rotary lever or the body portion, and configured to move between a coupling position at which the rotary lever and the body portion are coupled together and a decoupling position at which coupling between the rotary lever and the body portion is canceled.
   With this configuration, the rotary lever and the body portion are coupled together at the coupling position of the actuator. Thus, when the rotary lever rotates by the input from the input device, the body portion rotates together with the rotary lever. Then, the spindle attached to the body portion rotates about a center axis thereof. Accordingly, rotation of the spindle is transmitted to an output device, and therefore, operation according to the input operation of the input device is output from the output device.
   On the other hand, at the decoupling position of the actuator, coupling between the rotary lever and the body portion is canceled. Thus, the rotary lever rotates by the input from the input device, whereas the body portion remains stationary. That is, the rotary lever idles on the body portion. Consequently, rotation of the rotary lever in response to the input operation of the input device is not transmitted to the spindle and the output device. With this configuration, even if the input device is unexpectedly operated upon vehicle stop, the input operation of the input device is not transmitted to the output device.
   Moreover, according to the configuration of the present invention, the cancellation mechanism is placed at the transmission mechanism connecting between the input device and the output device. Thus, it is not necessary to separately provide a stopper and the like as in the typical case. Consequently, the size reduction and the reduced number of components can be achieved.
   Further, the actuator moves to switch the position thereof between the coupling position and the decoupling position. Thus, it is not necessary to attach and detach a separate stopper as in the typical case. As a result, a simple cancellation mechanism can be provided.
(2) The cancellation mechanism described in (1) preferably includes: a safety pin provided extendable on a movement path from the coupling position to the decoupling position of the actuator, and positioned, when the actuator is at the coupling position, at a protruding position on the movement path to restrict movement of the actuator to the decoupling position.
   According to this configuration, when the actuator is at the coupling position, the safety pin is disposed at the protruding position. Thus, even if the actuator unexpectedly moves toward the decoupling position, the actuator and the safety pin contact each other on the movement path. As a result, further movement of the actuator can be restricted. This prevents the actuator from returning to the decoupling position due to malfunction of the actuator or the like.
(3) The cancellation mechanism described in the above-described (1) or (2) preferably includes a safety cam configured to contact the safety pin to position the safety pin at the protruding position.

According to this configuration, the safety pin is brought into contact with the safety cam, so that the safety cam is positioned at the protruding position. Thus, the safety pin can be reliably held at the protruding position, and therefore, the operation reliability of the cancellation mechanism can be ensured.

### EFFECTS OF THE INVENTION

According to the present invention, a simple cancellation mechanism achieving a size reduction and the reduced number of components can be provided.

### BRIEF DESCRIPTION OF THE DRAWINGS

Fig. 1 is an exploded perspective view of a transmission mechanism according to a first embodiment.
Fig. 2 is a perspective view of a cancellation mechanism according to the first embodiment.
Fig. 3 is a plan view of the cancellation mechanism according to the first embodiment.
Fig. 4 is a cross-sectional view taken along an A-A line of Fig. 3.
Fig. 5 is a cross-sectional view illustrating a coupling position of an actuator and associated with Fig. 4.
Fig. 6 is a flowchart for describing operation upon vehicle start.
Fig. 7 is a diagram for describing operation of the cancellation mechanism when the actuator is at the coupling position, and is a plan view associated with Fig. 3.
Fig. 8 is a flowchart for describing operation upon vehicle stop.
Fig. 9 is a diagram for describing operation of the cancellation mechanism when the actuator is at a decoupling position, and is a plan view associated with Fig. 3.
Fig. 10 is an exploded perspective view of a transmission mechanism according to a second embodiment.
Fig. 11 is a perspective view of a cancellation mechanism according to the second embodiment.
Fig. 12 is a partial cross-sectional view taken along a B-B line of Fig. 11.
Fig. 13 is a diagram for describing operation of the cancellation mechanism when an actuator is at a coupling position, and is a partial cross-sectional view associated with Fig. 12.
Fig. 14 is a diagram for describing operation of the cancellation mechanism when the actuator is at a decoupling position, and is a partial cross-sectional view
associated with Fig. 12.

### DETAILED DESCRIPTION

Next, embodiments of the present invention will be described below with reference to the drawings.

### [First Embodiment]

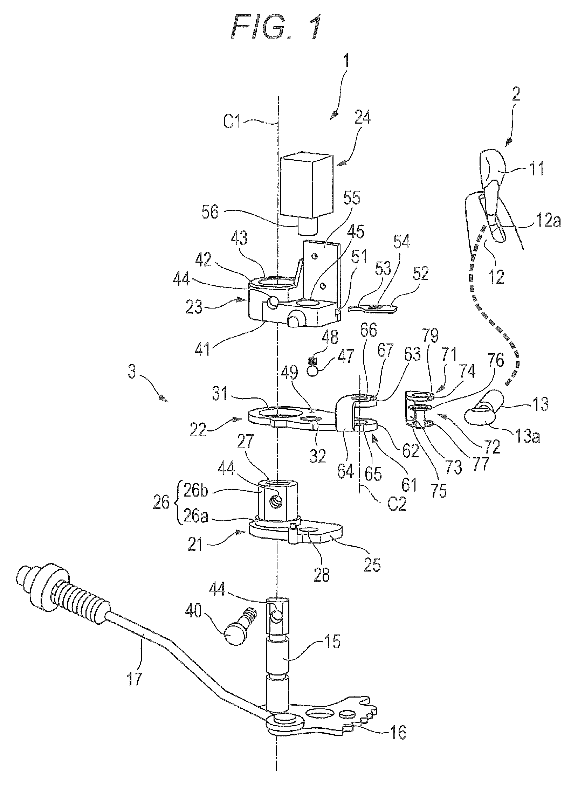

Fig. 1 is an exploded perspective view of a transmission mechanism 3 according to the present embodiment.

As illustrated in Fig. 1, a cancellation mechanism 1 of the present embodiment is provided in, for example, an engine room of a vehicle which is not shown in the figure. The cancellation mechanism 1 is mounted on the transmission mechanism 3 configured to transmit a shift position of a shift lever device (an input device) 2 operated by a passenger to a not-shown automatic transmission (an output device).

### <Shift Lever Device>

First, the shift lever device 2 will be briefly described.

The shift lever device 2 is placed on an instrument panel, a center console, or the like of the vehicle. The shift lever device 2 includes a shift lever 11 supported to tiltably move, and an escutcheon cover 12 covering the periphery of a base portion of the shift lever 11 and having a guide groove 12a formed along the direction where the shift lever 11 is tilted.

Characters (for example, P, R, N, D, and L) indicating shift positions such as a parking position, a reverse position, a neutral position, a drive position, and a low position are put on the surface of the escutcheon cover 12 along the guide groove 12a.

The shift lever device 2 is configured such that the shift lever 11 tiltably moves along the guide groove 12a to perform shift change according to a tilt position. Note that the shift lever device 2 is provided with, for example, a not-shown shift lock mechanism configured to stop (lock) the shift lever 11 from tiltably moving in an engine stop state. In the shift lock mechanism, the shift lever 11 is, after engine start, unlocked with a brake pedal being pushed and a not-shown pressing button of the shift lever 11 being pressed. Thus, the shift lock mechanism is configured to allow tilting movement of the shift lever 11.

### <Transmission Mechanism>

The transmission mechanism 3 mainly includes a spindle 15 supported to rotate relative to the automatic transmission, the above-described cancellation mechanism 1 attached to the spindle 15, and a control wire 13 connecting between the cancellation mechanism 1 and the shift lever device 2.

First, the control wire 13 is configured to move in the extension direction thereof according to tilting movement of the shift lever 11, for example. One end portion of the control wire 13 is connected to the shift lever 11 in the escutcheon cover 12. On the other hand, a ring portion 13a is formed at the other end portion of the control wire 13. The control wire 13 is connected to the cancellation mechanism 1 via the ring portion 13 a.

A rotary plate 16 that is rotatable together with the spindle 15 is provided at a base end portion of the spindle 15. For the rotary plate 16, a coupling member 17 coupling the rotary plate 16 and a manual valve or the like in the automatic transmission together is provided between the rotary plate 16 and the manual valve to be rotatable relative to the rotary plate 16. The shift lever device 2 operates to rotate the spindle 15 and the rotary plate 16 to move the coupling member 17 back and forth. Thus, the manual valve of the automatic transmission is switched to a position corresponding to the tilt position of the shift lever 11, thereby performing shift change. In the following description, the direction along the center axis C1 of the spindle 15 is referred to as a "center axis C1 direction."

### <Cancellation Mechanism>

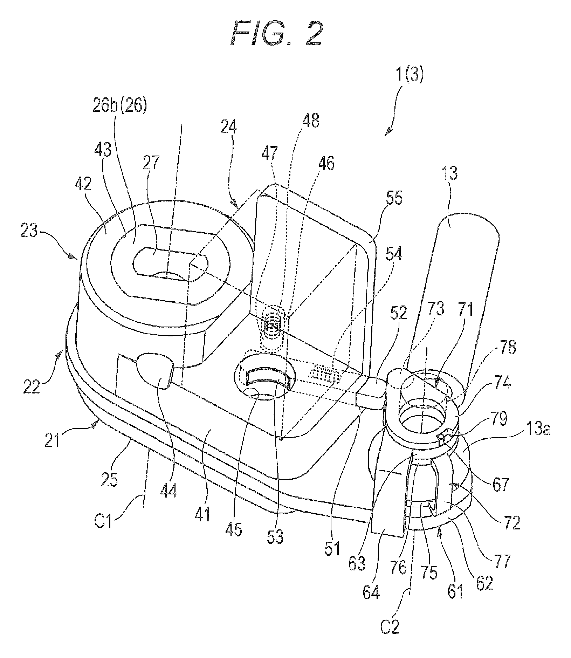

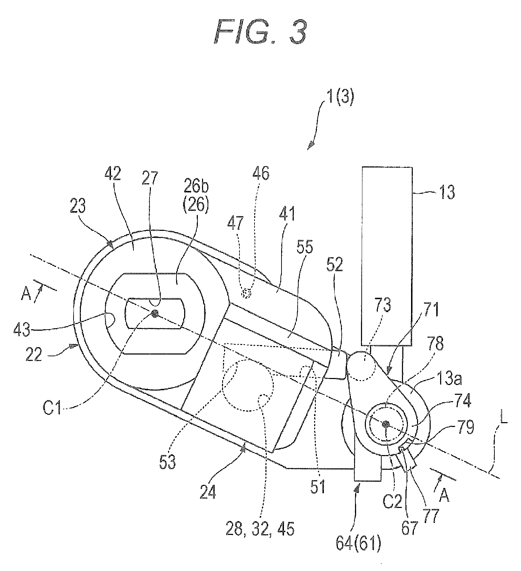

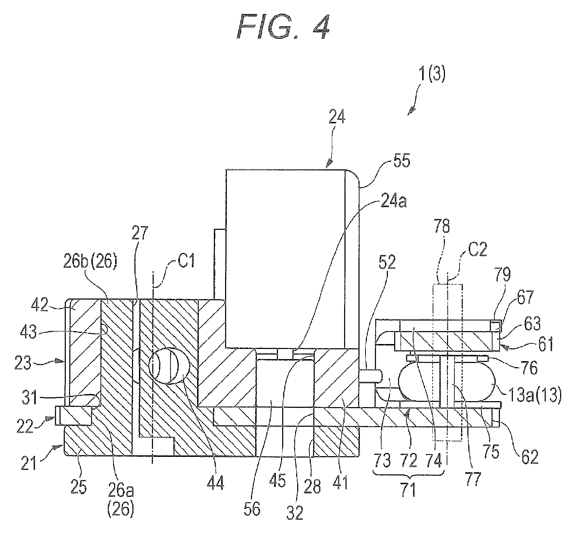

Fig. 2 is a perspective view of the cancellation mechanism 1, and Fig. 3 is a plan view of the cancellation mechanism 1. Moreover, Fig. 4 is a cross-sectional view along an A-A line of Fig. 3.

As illustrated in Figs. 1 to 4, in the cancellation mechanism 1 of the present embodiment, a first body portion 21, a rotary lever 22, a second body portion 23, and an actuator 24 are arranged in this order from one end side to the other end side in the center axis C1 direction of the spindle 15.

The first body portion 21 includes a plate-shaped base plate 25 whose thickness direction is the center axis C1 direction, and a boss portion 26 formed at a base end portion of the base plate 25 along the longitudinal direction thereof and protruding toward the other end side in the center axis C1 direction.

As illustrated in Fig. 4, the boss portion 26 includes a large-diameter portion 26a positioned at one end portion in the center axis C1 direction, and a small-diameter portion 26b positioned at the other end portion in the center axis C1 direction and narrowed as compared to the large-diameter portion 26a. An insertion hole 27 penetrating the first body portion 21 in the center axis C1 direction is formed at the boss portion 26. The spindle 15 (see Fig. 1) is inserted into the insertion hole 27.

An engagement hole 28 penetrating the base plate 25 in the center axis C1 direction is formed at a tip end portion of the base plate 25 along the longitudinal direction thereof.

As illustrated in Figs. 1 to 4, the rotary lever 22 is in such a plate shape that the rotary lever 22 is arranged to overlap with the first body portion 21 in a plan view in the center axis C1 direction. An insertion hole 31 into which the large-diameter portion 26a of the boss portion 26 described above is inserted is formed at a base end portion of the rotary lever 22 along the longitudinal direction thereof. Thus, the rotary lever 22 is supported by the boss portion 26 to be rotatable along the circumferential direction about the spindle 15 (the center axis C1).

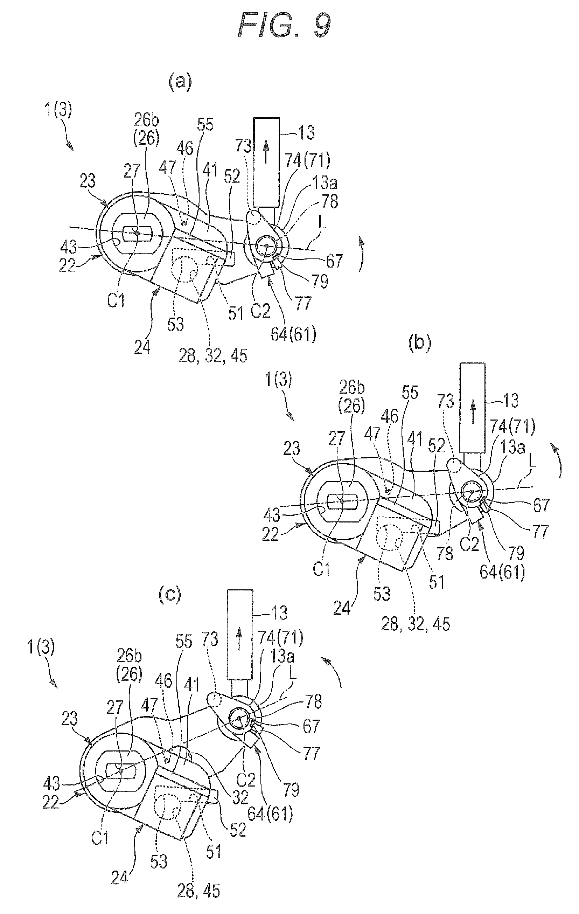

An engagement hole 32 penetrating the rotary lever 22 in the center axis C1 direction is formed at a tip end portion of the rotary lever 22 along the longitudinal direction thereof. The engagement hole 32 is formed to have the same diameter as that of the engagement hole 28 of the first body portion 21 described above. In this case, the rotary lever 22 is configured to rotate about the center axis C1 to change its position between an overlapping position at which the engagement hole 32 overlaps with the engagement hole 28 of the first body portion 21 in the center axis C1 direction and a retracted position (see Fig. 9(c)) at which the engagement hole 32 and the engagement hole 28 of the first body portion 21 are shifted from each other along the center axis C 1 direction.

The second body portion 23 includes a base plate 41 having the same shape as that of the first body portion 21 in a plan view in the center axis C1 direction. Moreover, the second body portion 23 further includes a boss portion 42 formed at a base end portion of the base plate 41 along the longitudinal direction thereof and protruding toward the other end side in the center axis C1 direction.

First, the boss portion 42 extends coaxially with the boss portion 26 of the first body portion 21 described above. At a center portion of the boss portion 42, an insertion hole 43 is formed to penetrate the second body portion 23 in the center axis C1 direction. The boss portion 26 of the first body portion 21 is inserted into the insertion hole 43.

The insertion hole 43 is formed such that the inner diameter thereof is larger than the outer diameter of the small-diameter portion 26b of the first body portion 21 described above and is smaller than the outer diameter of the large-diameter portion 26a. The boss portion 42 and the large-diameter portion 26a are in contact with each other in the center axis C1 direction (see Fig. 4). Thus, the second body portion 23 is attached to the first body portion 21 with the rotary lever 22 being interposed between the first and second body portions 21 and 23. Note that attachment holes 44 are formed at the boss portion 42 of the second body portion 23, the small-diameter portion 26b of the first body portion 21, and the spindle 15 along the radial direction thereof. A fastening member 40 (see Fig. 1) such as a bolt is screwed into the attachment holes 44 to fasten the second body portion 23, the first body portion 21, and the spindle 15 together. Note that the first body portion 21 and the second body portion 23 form a body portion of the present embodiment.

An engagement hole 45 penetrating the base plate 41 in the center axis C1 direction is formed at a tip end portion of the base plate 41 along the longitudinal direction thereof (i.e., at the position overlapping with the engagement hole 28 of the first body portion 21 in the center axis C1 direction).

As illustrated in Fig. 2, a recess 46 opening on one end side (a side close to the rotary lever 22) along the center axis C1 direction is formed at the base plate 41. The recess 46 houses a click ball 47 for positioning between the rotary lever 22 and the second body portion 23 when the rotary lever 22 is at the above-described overlapping position. The click ball 47 is biased toward one end side in the center axis C1 direction by a biasing member 48 housed in the recess 46. When the rotary lever 22 is at the overlapping position, the click ball 47 is fitted into a positioning recessed portion 49 (see Fig. 1) of the rotary lever 22.

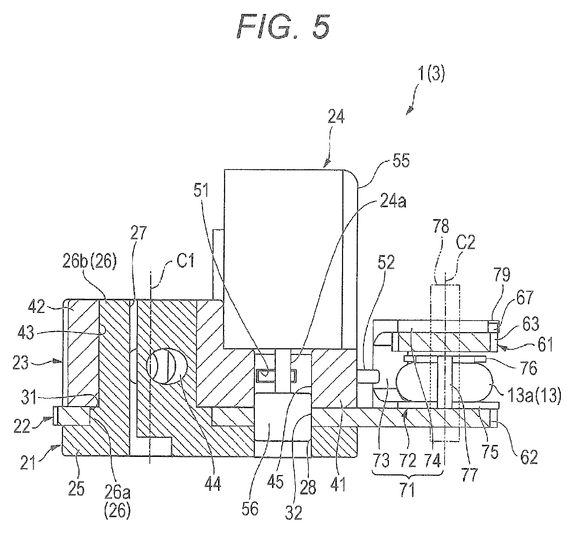

Moreover, a slit 51 extending along the longitudinal direction of the base plate 41 is formed at the base plate 41. The slit 51 is in a flat shape whose thickness direction is the center axis C1 direction. A base end portion of the slit 51 communicates with the above-described engagement hole 45 (see Fig. 5) in the base plate 41. A tip end portion of the slit 51 opens at a tip end surface of the base plate 41 along the longitudinal direction thereof. In the example of Fig. 3, the slit 51 extends in the direction intersecting with a virtual line L connecting between the center axis C1 of the spindle 15 described above and a center axis C2 of a coupling pin 78 described later.

The slit 51 houses a safety pin 52 movable in the slit 51 along the extension direction thereof. A base end portion of the safety pin 52 is housed in the slit 51, and a tip end portion of the safety pin 52 protrudes from the opening of the slit 51 toward the outside of the base plate 41. At the base end portion of the safety pin 52, a housing recessed portion 53 recessed along the opening edge of the above-described engagement hole 45 is formed.

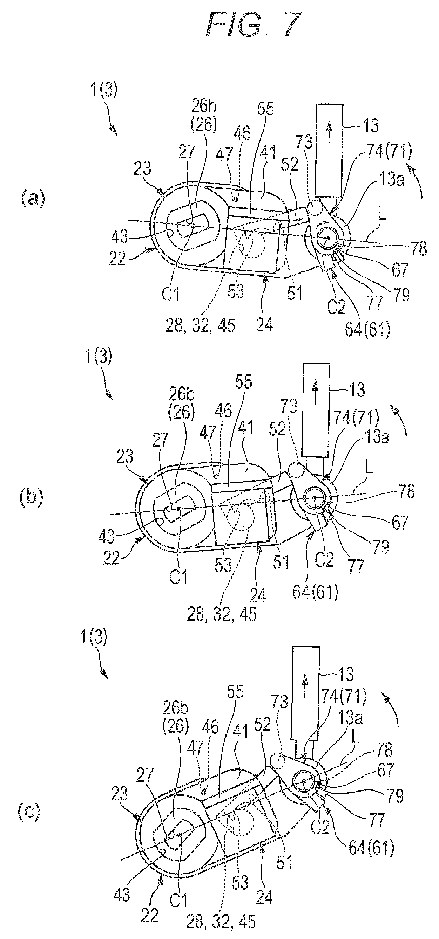

The safety pin 52 is configured to move between a protruding position (see Fig. 7) at which the safety pin 52 protrudes into the engagement hole 45 (on a movement path of a lock pin 56 described later) and a retracted position (see Fig. 3) at which the safety pin 52 is retracted from the engagement hole 45. That is, at the protruding position, the safety pin 52 is disposed such that a base end thereof (a portion of the opening edge of the housing recessed portion 53 positioned on a base end side of the safety pin 52 with respect to the housing recessed portion 53) is in the engagement hole 45. On the other hand, at the retracted position, the safety pin 52 is disposed such that the opening edge of the housing recessed portion 53 overlaps with the opening edge of the engagement hole 45 in the center axis C1 direction. As illustrated in Fig. 2, a biasing member 54 configured to bias the safety pin 52 toward the protruding position (in the direction where the safety pin 52 comes out of the slit 51) is provided between the safety pin 52 and the slit 51.

Moreover, at a portion of the base plate 41 adjacent to the engagement hole 45, a flat plate-shaped actuator stay 55 extending toward the other end side in the center axis C1 direction is formed. The above-described actuator 24 is attached to the actuator stay 55.

As illustrated in Fig. 4, the actuator 24 is formed of, for example, a solenoid. The actuator 24 is fixed to the actuator stay 55 in such an orientation that a movable portion 24a is movable back and forth in the center axis C1 direction. The cylindrical lock pin 56 is fixed to one end portion of the movable portion 24a in the center axis C1 direction. The lock pin 56 is formed to have such a size that the lock pin 56 can be inserted into the above-described engagement holes 28, 32, and 45.

Fig. 5 is a cross-sectional view illustrating a coupling position of the actuator 24 and associated with Fig. 4.

As illustrated in Fig. 5, the movable portion 24a of the actuator 24 is configured to move, along the center axis C1 direction (the movement path), between the coupling position at which the lock pin 56 strides over the above-described engagement holes 28, 32, and 45 and a decoupling position at which the lock pin 56 is positioned only in the engagement hole 45 close to the second body portion 23 as illustrated in Figs. 1 to 4. That is, at the coupling position, the body portions 21 and 23 and the rotary lever 22 engage with each other via the lock pin 56. At the decoupling position, the lock pin 56 is retracted from the engagement holes 28 and 32 to cancel engagement between each body portion 21, 23 and the rotary lever 22 by the lock pin 56.

A wire coupling portion 61 coupled to the above-described control wire 13 is formed integrally with the above-described rotary lever 22 at the tip end portion thereof.

As illustrated in Fig. 1, the wire coupling portion 61 is in a C-shape as viewed from the side. The wire coupling portion 61 includes a first coupling piece 62 provided continuously to the tip end portion of the rotary lever 22 along the longitudinal direction thereof, a second coupling piece 63 disposed with a distance from the first coupling piece 62 on the other end side in the center axis C1 direction, and a connection portion 64 connecting the coupling pieces 62 and 63 together.

Of the coupling pieces 62 and 63, portions overlapping with each other in the center axis C1 direction are provided with through-holes 65 and 66 penetrating the coupling pieces 62 and 63, respectively. Moreover, part of the outer peripheral edge of the second coupling piece 63 is provided with a protrusion 67 protruding toward the other end side in the center axis C1 direction (i.e., toward the side opposite to the first coupling piece 62).

In addition, the ring portion 13a of the control wire 13 described above is coupled to the wire coupling portion 61 via a safety cam 71.

The safety cam 71 includes a bush 72 disposed between the ring portion 13a and the wire coupling portion 61, a pin restrictor 73 for restricting movement of the above-described safety pin 52, and a cam restrictor 74 for restricting movement of the safety cam 71 itself. The bush 72, the pin restrictor 73, and the cam restrictor 74 are integrally formed.

The bush 72 is in a C-shape as viewed from the side. The bush 72 is disposed to sandwich the ring portion 13a of the control wire 13 in the wire coupling portion 61. Specifically, as illustrated in Figs. 1 and 4, the bush 72 includes first and second circular supports 75 and 76 sandwiching the ring portion 13a and facing each other in the center axis C1 direction, and a connection portion 77 connecting the supports 75 and 76 together.

As illustrated in Figs. 1 to 3, the pin restrictor 73 is in a columnar shape extending from the outer peripheral edge of the first support 75 described above toward the other end side in the center axis C1 direction. The tip end portion of the safety pin 52 described above laterally contacts the pin restrictor 73.

The cam restrictor 74 is provided continuously from the other end side of the pin restrictor 73 in the center axis C1 direction. The cam restrictor 74 is in a circular shape overlapping with the second coupling piece 63 of the wire coupling portion 61 described above from the other end side in the center axis C1 direction. The coupling pin 78 is inserted into the cam restrictor 74, through-holes 65 and 66 of the coupling pieces 62 and 63 described above, the supports 75 and 76, and the ring portion 13a. The coupling pin 78 supports the rotary lever 22, the safety cam 71, and the ring portion 13a such that the rotary lever 22, the safety cam 71, and the ring portion 13a are rotatable relative to each other in the circumferential direction about the center axis C2. Note that the center axis C2 is parallel to the center axis C1 of the spindle 15 described above.

At part of the outer peripheral edge of the cam restrictor 74, a cutout 79 is formed to open toward the outside in the radial direction. The cutout 79 is in a long groove shape extending along the circumferential direction of the cam restrictor 74. The protrusion 67 of the wire coupling portion 61 described above is housed in the cutout 79. Thus, when the safety cam 71 rotates about the center axis C2 relative to the rotary lever 22, the protrusion 67 of the wire coupling portion 61 comes into contact with an end surface of the cutout 79 facing the inside in the circumferential direction, thereby restricting rotation of the safety cam 71 relative to the rotary lever 22.

The cancellation mechanism 1 of the present embodiment is, as an initial state (before engine start) illustrated in Figs. 3 and 4, held with the rotary lever 22 being at the overlapping position, the safety pin 52 being at the retracted position, and the actuator 24 being at the decoupling position. That is, the cancellation mechanism 1 is at such a position that the engagement hole 32 of the rotary lever 22 and the engagement holes 28 and 45 of the body portions 21 and 23 overlap with each other in the center axis C1 direction (the overlapping position), that the safety pin 52 is retracted from the engagement hole 45 (the retracted position), and that the lock pin 56 of the actuator 24 is retracted from the engagement holes 28 and 32 (the decoupling position).

In this case, the rotary lever 22 is configured to be rotatable about the center axis C1 of the spindle 15 relative to the body portions 21 and 23.

Moreover, as illustrated in Fig. 3, movement of the safety pin 52 along the extension direction thereof is, at the retracted position, restricted in such a manner that part of the lock pin 56 of the actuator 24 is fitted into the housing recessed portion 53. In addition, a tip end portion of the control wire 13 is in contact with the tip end portion of the safety pin 52 with the pin restrictor 73 being interposed therebetween. This also restricts movement of the safety pin 52 along the extension direction thereof. In the above-described initial state, the protrusion 67 of the wire coupling portion 61 is in proximity to or contacts the end surface of the cutout 79 of the cam restrictor 74 on one end side in the circumferential direction.

### <Features>

Next, the features of the above-described cancellation mechanism 1 will be described below.

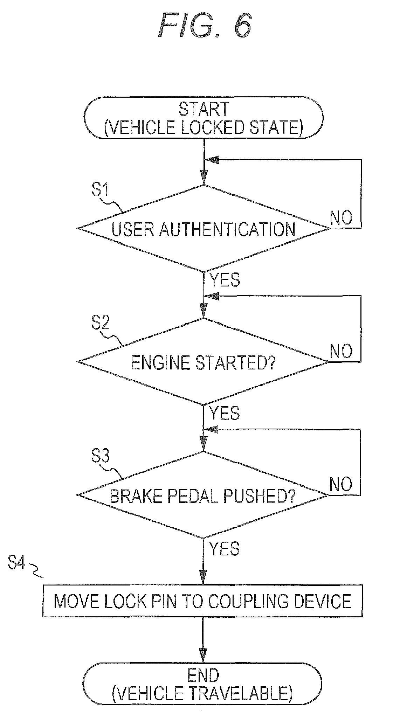

First, operation upon vehicle start will be described based on a flowchart of Fig. 6. Each determination described below is performed by an ECU or the like mounted on the vehicle. Moreover, the description will be made below, supposing that the shift lever 11 is at the parking position, i.e., the cancellation mechanism 1 is in the above-described initial state.

As illustrated in Fig. 6, user authentication is first performed at step S 1. When a regular user is confirmed (when a determination result at step S1 is "YES"), a door is unlocked. The user authentication may be performed using an immobilizer or a mechanical key. On the other hand, when the determination result at step S1 is "NO," step S1 is repeated.

Next, at step S2, it is determined whether or not an engine is started.

When a determination result at step S2 is "YES," it is determined that the engine has been started (an ignition ON state), and the process proceeds to step S3.

On the other hand, when the determination result at step S2 is "NO," it is determined that the engine has not been started yet, and step S2 is repeated.

Next, at step S3, it is determined whether or not the brake pedal is pushed. When a determination result at step S3 is "YES," the process proceeds to step S4. When the determination result at step S3 is "NO," step S3 is repeated.

Next, at step S4, the lock pin 56 of the actuator 24 moves to the coupling position as illustrated in Fig. 5. Specifically, when the actuator 24 is driven to move the movable portion 24a forward, the lock pin 56 is disposed at such a position that the lock pin 56 strides over the above-described engagement holes 28, 32, and 45. That is, the body portions 21 and 23 and the rotary lever 22 are coupled together via the lock pin 56.

This completes the routine, and therefore, the vehicle becomes travelable. Movement of the lock pin 56 to the coupling position cancels engagement between the lock pin 56 and the safety pin 52 (the housing recessed portion 53). Note, however, that the tip end portion of the control wire 13 is in contact with the tip end portion of the safety pin 52 with the pin restrictor 73 being interposed therebetween as described above, and therefore, the safety pin 52 is held at the retracted position.

Fig. 7 is a diagram for describing operation of the cancellation mechanism 1 when the actuator 24 is at the coupling position, and is a plan view associated with Fig. 3.

As illustrated in Figs. 7(a) to 7(c), when the shift lever 11 of the shift lever device 2 tiltably moves from the parking position to, for example, the drive position in a vehicle travelable state, the control wire 13 moves along the extension direction thereof according to tilting movement of the shift lever 11. Note that in the example illustrated in the figures, the control wire 13 moves in such a direction that the cancellation mechanism 1 is pulled (a pulling direction).

When the control wire 13 moves in the pulling direction, the rotary lever 22 rotates about the center axis C1. At this point, since the rotary lever 22 engages with the body portions 21 and 23 via the lock pin 56, the body portions 21 and 23 rotate together with the rotary lever 22. Accordingly, the spindle 15 rotates about the center axis C1. By rotation of the spindle 15, the coupling member 17 (see Fig. 1) moves back and forth via the rotary plate 16 (see Fig. 1). This switches the manual valve of the automatic transmission to the position associated with the tilt position of the shift lever 11. As a result, the above-described shift change is performed.

Moreover, when the control wire 13 moves in the pulling direction, the control wire 13 (the ring portion 13a) rotates away from the second body portion 23 in the circumferential direction about the center axis C2. Thus, restriction of the safety cam 71 by the control wire 13 is canceled. Then, the safety pin 52 moves, by the biasing force of the biasing member 54, toward the protruding position while pushing the pin restrictor 73. Accordingly, a base end of the safety pin 52 is disposed in the engagement hole 45. That is, the safety pin 52 is disposed on the movement path (the center axis C1 direction) of the lock pin 56. Thus, even if the movable portion 24a unexpectedly moves backward, the lock pin 56 and the safety pin 52 contact each other on the movement path of the lock pin 56. This can restrict further backward movement of the lock pin 56. This prevents, in the vehicle travelable state, the lock pin 56 from returning to the decoupling position due to malfunction of the actuator 24 or the like.

As illustrated in Fig. 7(a), when the pin restrictor 73 is pushed by the safety pin 52, the entirety of the safety cam 71 rotates about the center axis C2. In this case, as illustrated in Fig. 7(b), the protrusion 67 of the wire coupling portion 61 is in proximity to or contacts the end surface of the cutout 79 of the cam restrictor 74 on the other end side in the circumferential direction. This restricts rotation of the safety cam 71.

By restriction of rotation of the safety cam 71, the safety pin 52 is positioned in a state of being in contact with the pin restrictor 73. Thus, the safety pin 52 can be reliably held at the protruding position. Consequently, the operation reliability of the cancellation mechanism 1 can be ensured.

As illustrated in Figs. 7(b) and 7(c), when the control wire 13 further moves in the pulling direction after restriction of rotation of the safety cam 71, the rotary lever 22 and the control wire 13 (the ring portion 13a) rotate respectively about the center axis C1 and the center axis C2. Accordingly, the control wire 13 moves away from the pin restrictor 73.

In the case of tiltably moving the shift lever 11 of the shift lever device 2 from the drive position to, for example, the parking position, the control wire 13 moves in a pushing direction to perform operation reversely to the above-described operation.

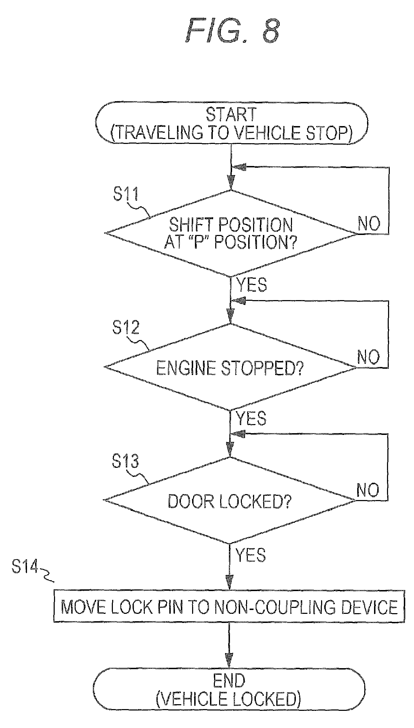

Next, operation upon vehicle stop will be described based on a flowchart of Fig. 8. The description will be made below, supposing that the state of Fig. 5 (the lock pin 56 is at the above-described coupling position, and the safety pin 52 is at the retracted position) is the state upon vehicle stop.

As illustrated in Fig. 8, after vehicle stop, it is first determined at step S 11 whether or not the shift position is the parking position (P).

When a determination result at step S11 is "YES," the process proceeds to step S 12. When the determination result is "NO," step S 11 is repeated.

Next, at step S12, it is determined whether or not the engine has been stopped.

When a determination result at step S12 is "YES," it is determined that the engine has been stopped (an ignition OFF state), and the process proceeds to step S13.

On the other hand, when the determination result at step S12 is "NO," it is determined that the engine has not been stopped yet, and step S12 is repeated.

Next, at step S 13, it is determined whether or not the door is locked.

When a determination result at step S 13 is "YES," it is determined that the door is locked, and the process proceeds to step S 14.

On the other hand, when the determination result at step S 13 is "NO," step S 13 is repeated.

Then, at step S 14, the lock pin 56 of the actuator 24 is moved to the decoupling position. Specifically, as illustrated in Fig. 3, the driving of the actuator 24 is stopped, and accordingly, the movable portion 24a is moved backward. Then, the lock pin 56 is disengaged from the engagement holes 28 and 32. Subsequently, movement of the safety pin 52 is restricted in such a manner that engagement between the body portions 21 and 23 and the rotary lever 22 is canceled and that the lock pin 56 is housed in the housing recessed portion 53 of the safety pin 52.

In the above-described manner, the cancellation mechanism 1 returns to the above-described initial state, and the operation upon vehicle stop is completed.

Upon vehicle stop as described above, the shift lever 11 might tiltably move due to damage of the shift lock mechanism of the shift lever device 2 caused by, for example, great force application to the shift lever 11.

Fig. 9 is a diagram for describing operation of the cancellation mechanism 1 when the actuator 24 is at the decoupling state, and is a plan view associated with Fig. 3.

In this case, according to the present embodiment, the cancellation mechanism 1 is at the above-described initial state upon vehicle stop. That is, the lock pin 56 is at the decoupling position, and engagement between the rotary lever 22 and the body portions 21 and 23 is canceled. Thus, as illustrated in Figs. 9(a) to 9(c), the shift lever 11 tiltably moves to move the control wire 13 in the pulling direction, thereby rotating the rotary lever 22 about the center axis C1. However, the body portions 21 and 23 remain stationary. That is, the rotary lever 22 idles on the body portions 21 and 23. Thus, rotation of the rotary lever 22 in response to tilting movement of the shift lever 11 is not transmitted to the spindle 15 and the automatic transmission.

With this configuration, even if the shift lever 11 is unexpectedly operated upon vehicle stop, shift change of the automatic transmission is not performed.

As described above, the cancellation mechanism of the present embodiment includes the rotary lever 22 connected to the shift lever device 2, and the body portions 21 and 23 connected to the automatic transmission. This cancellation mechanism is configured to include the actuator 24 movable between the coupling position at which the rotary lever 22 and the body portions 21 and 23 are coupled together and the decoupling position at which the coupling among the rotary lever 22 and the body portions 21 and 23 is canceled.

Such a configuration enables, upon vehicle stop, the decoupling state in which the coupling among the rotary lever 22 and the body portions 21 and 23 is canceled. Thus, even if the shift lever 11 is unexpectedly operated, shift change of the automatic transmission is not performed as described above.

In addition, in the present embodiment, the cancellation mechanism 1 is placed at the transmission mechanism 3 connecting between the shift lever device 2 and the automatic transmission. Thus, it is not necessary to provide a stopper and the like separately from the shift lever device as in the typical case. Consequently, the size reduction and the reduced number of components can be achieved.

Moreover, upon vehicle stop, the actuator 24 moves to switch the position thereof from the coupling position to the decoupling position. Thus, it is not necessary to attach and detach a separate stopper as in the typical case, and a simple cancellation mechanism 1 can be provided.

For a vehicle on which an antitheft device such as a steering lock is mounted, it is necessary to place a biting recess, a lock bar, and the like of a steering shaft. This leads to the problem of complicating a steering post and the steering shaft. Further, there arise problems such as an increase in weight and cost.

On the other hand, with the configuration of the cancellation mechanism of the present embodiment, it is only necessary to place the cancellation mechanism 1 at the transmission mechanism 3. Thus, an increase in weight and cost due to placement of the cancellation mechanism 1 can be suppressed.

Moreover, the cancellation mechanism 1 of the present embodiment is placed at the engine room or the like as described above. Thus, unlike the case of providing the steering lock, a space around a driver's seat and the driver's knees can be ensured. Further, for example, the cancellation mechanism does not contact a driver upon collision.

### [Second Embodiment]

Next, a second embodiment of the present invention will be described below. In the following description, the same structural elements as those of the first embodiment will be designated by the same reference numerals, and the description thereof will be omitted.

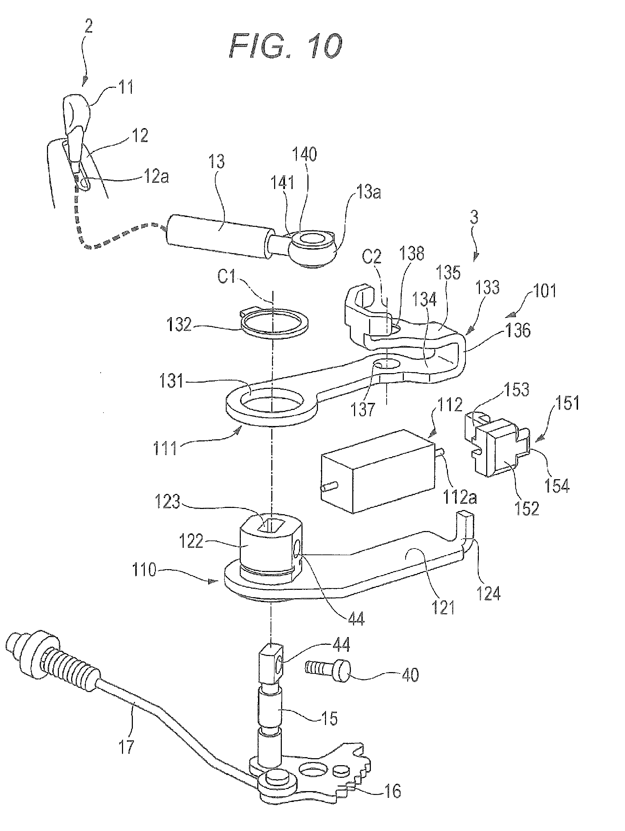

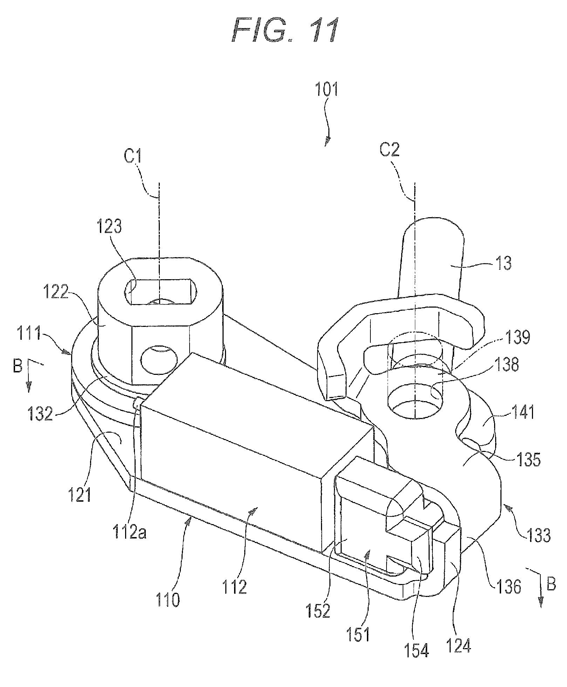

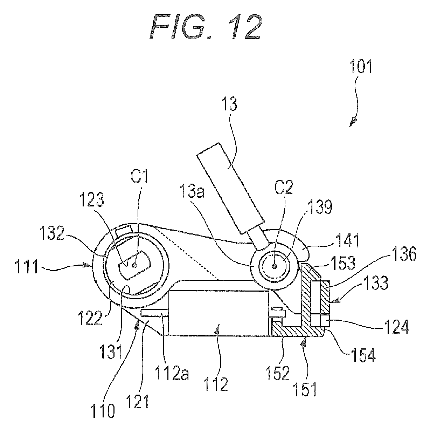

Fig. 10 is an exploded perspective view of a transmission mechanism 3 of the present embodiment, Fig. 11 is a perspective view of the transmission mechanism 3, and Fig. 12 is a partial cross-sectional view of the transmission mechanism 3 taken along a B-B line of Fig. 11.

As illustrated in Figs. 10 to 12, a cancellation mechanism 101 of the present embodiment mainly includes a body portion 110 attached to a spindle 15, a rotary lever 111 attached to the body portion 110 to be rotatable about a center axis C 1, and an actuator 112 configured to switch the body portion 110 and the rotary lever 111 between a coupling state and a decoupling state.

The body portion 110 includes a plate-shaped base plate 121 whose thickness direction is a center axis C1 direction, and a boss portion 122 formed at a base end portion of the base plate 121 along the longitudinal direction thereof and protruding toward the other end side in the center axis C1 direction. Moreover, an insertion hole 123 penetrating the boss portion 122 and the base plate 121 in the center axis C1 direction is formed at a base end portion of the body portion 110. The spindle 15 is inserted into the insertion hole 123.

At a tip end portion of the base plate 121 along the longitudinal direction thereof, an engagement protrusion 124 stands to extend toward the other end side in the center axis C1 direction.

The rotary lever 111 is in a plate shape whose thickness direction is the center axis C1 direction. An insertion hole 131 into which the above-described boss portion 122 is inserted is formed at a base end portion of the rotary lever 111 in the longitudinal direction thereof. Note that a stop ring 132 that prevents detachment of the rotary lever 111 is attached to a portion of the boss portion 122 positioned on the other end side in the center axis C1 direction with respect to the rotary lever 111.

A wire coupling portion 133 coupled to a control wire 13 is formed integrally with a rotary lever 22 at a tip end portion of the rotary lever 111 along the longitudinal direction thereof.

The wire coupling portion 133 is in a C-shape as viewed from the side. The wire coupling portion 133 includes a first coupling piece 134 provided continuously to the tip end portion of the rotary lever 111 along the longitudinal direction thereof, a second coupling piece 135 disposed with a distance from the first coupling piece 134 on the other end side in the center axis C1 direction, and a connection portion 136 connecting the coupling pieces 134 and 135 together.

In the example illustrated in the figure, the connection portion 136 is in contact with the above-described engagement protrusion 124 of the body portion 110 from one side in the circumferential direction about the center axis C 1.

Of the coupling pieces 134 and 135, portions overlapping with each other in the center axis C1 direction are provided with through-holes 137 and 138 (see Fig. 10) penetrating the coupling pieces 134 and 135, respectively. Moreover, a ring portion 13a of the control wire 13 described above is rotatably supported via a coupling pin 139 at the wire coupling portion 133. Specifically, the coupling pin 139 is inserted into the through-holes 137 and 138 of the coupling pieces 134 and 135 and the ring portion 13a. The rotary lever 111 and the ring portion 13a are supported to be rotatable about a center axis C2 of the coupling pin 139. The ring portion 13a is supported by the coupling pin 139 via a bush 140 (see Fig. 10). Part of the outer peripheral edge of the ring portion 13a of the present embodiment is provided with a fan-shaped safety cam 141 in a plan view in the center axis C1 direction.

The actuator 112 is fixed onto the base plate 121 in such an orientation that a movable portion 112a is movable back and forth in the direction perpendicular to the center axis C1 direction. A lock pin 151 is coupled to one end portion of the movable portion 112a. The lock pin 151 includes a base portion 152 fixed to the movable portion 112a, a first claw portion 153 provided continuously to one side of the base portion 152 in the circumferential direction about the center axis C1, and a second claw portion 154 provided continuously to the other side of the base portion 152 in the circumferential direction.

The first claw portion 153 is configured to be engageable with the connection portion 136 of the rotary lever 111 described above from one side in the circumferential direction. The second claw portion 154 engages with the engagement protrusion 124 of the body portion 110 described above from the other side in the circumferential direction.

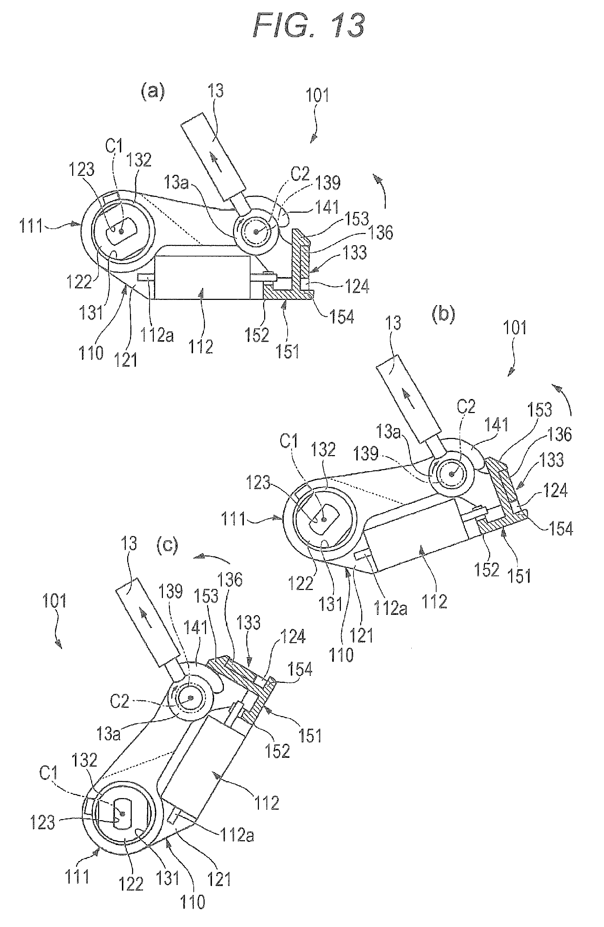

When the actuator 112 is driven to move the movable portion 112a forward, the first claw portion 153 of the lock pin 151 comes into engagement with the connection portion 136 of the rotary lever 111, and the second claw portion 154 comes into engagement with the engagement protrusion 124 of the body portion 110 (see Fig. 13). That is, the claw portions 153 and 154 sandwich the connection portion 136 and the engagement protrusion 124 together. This results in the coupling position (see Fig. 13) at which the body portion 110 and the rotary lever 111 engage with each other via the lock pin 151.

On the other hand, as illustrated in Fig. 12, the driving of the actuator 112 is stopped, and accordingly, the movable portion 112a is moved backward. This results in the decoupling position at which engagement between the first claw portion 153 of the lock pin 151 and the connection portion 136 of the rotary lever 111 is canceled. In the example illustrated in the figures, the second claw portion 154 engages with the engagement protrusion 124 at both of the coupling and decoupling positions. Note, however, that it is only necessary that the second claw portion 154 engages with the engagement protrusion 124 at least at the coupling position. Moreover, the above-described safety cam 141 is formed at such a position that the safety cam 141 does not contact the lock pin 151 at the decoupling position of the actuator 112.

Fig. 13 is a diagram for describing operation of the cancellation mechanism 101 when the actuator 112 is at the coupling position, and is a plan view associated with Fig. 12.

In order to bring the cancellation mechanism 101 configured as described above into a vehicle travelable state, the lock pin 151 of the actuator 112 moves to the coupling position. Specifically, as illustrated in Fig. 13(a), when the actuator 112 is driven to move the movable portion 112a forward, the first claw portion 153 of the lock pin 151 comes into engagement with the connection portion 136 of the rotary lever 111. That is, the body portion 110 and the rotary lever 111 are coupled together via the lock pin 151.

Then, as illustrated in Figs. 13(b) and 13(c), when a shift lever 11 of a shift lever device 2 tiltably operates, in the vehicle travelable state, to move the control wire 13 along a pulling direction, the control wire 13 (the ring portion 13a) rotates about the center axis C2 relative to the rotary lever 22, and the rotary lever 111 rotates about the center axis C 1. At this point, the rotary lever 111 engages with the body portion 110 via the lock pin 151. Thus, the body portion 110 rotates together with the rotary lever 111, thereby rotating the spindle 15 about the center axis C1. In this manner, shift change can be performed similarly to the above-described first embodiment.

In response to rotation of the control wire 13 about the center axis C2, the safety cam 141 of the ring portion 13a is disposed at the same position (the position overlapping with the first claw portion 153 in the direction perpendicular to the center axis C1) as that of the first claw portion 153 of the lock pin 151 in the circumferential direction about the center axis C1. Thus, even if the movable portion 112a unexpectedly moves backward, the lock pin 151 and the safety cam 141 contact each other in the direction perpendicular to the center axis C1 direction. As a result, further backward movement of the lock pin 151 can be restricted. This prevents the lock pin 151 from returning to the decoupling position in the vehicle travelable state.

On the other hand, upon vehicle stop, the lock pin 151 of the actuator 112 moves to the decoupling position as illustrated in Fig. 12. Specifically, driving of the actuator 112 is stopped, and accordingly, the movable portion 112a is moved backward. Then, the first claw portion 153 of the lock pin 151 disengages from the connection portion 13 6 of the rotary lever 111. Thus, engagement between the body portion 110 and the rotary lever 111 is canceled.

In the above-described manner, the cancellation mechanism 101 returns to an initial state, and the operation upon vehicle stop is completed.

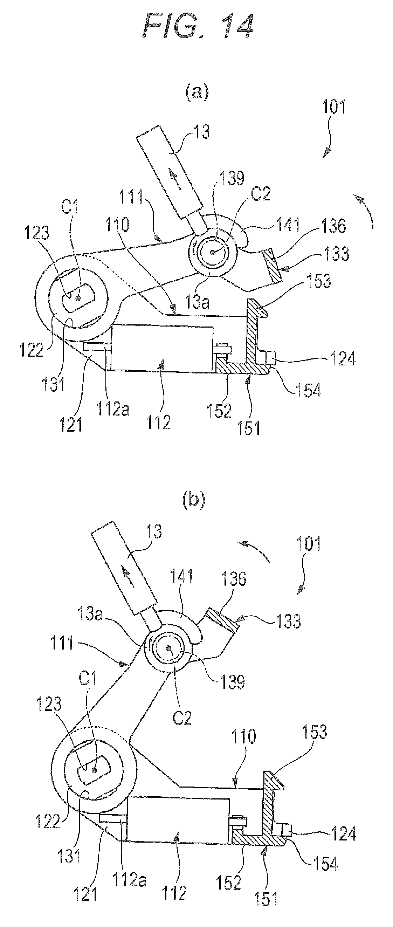

Fig. 14 is a diagram for describing operation of the cancellation mechanism 101 when the actuator 112 is at the decoupling position, and is a plan view associated with Fig. 12.

As illustrated in Figs. 14(a) and 14(b), in the case of tiltably moving the shift lever 11 in the initial state, the control wire 13 moves to rotate the rotary lever 111 about the center axis C1. However, the body portion 110 remains stationary. That is, the rotary lever 111 idles on the body portion 110. Thus, rotation of the rotary lever 111 in response to tilting movement of the shift lever 11 is not transmitted to the spindle 15 and the automatic transmission.

This provides the same features and advantageous effects as those of the above-described first embodiment. Moreover, it is not necessary to configure the body portion 110 as divided portions as in the first embodiment. Thus, the size reduction and the reduced number of components can be achieved.

The embodiments of the present invention have been described above in detail with reference to the drawings. Note, however, that the specific configuration is not limited to these embodiments. The embodiments of the present invention include design change or the like without departing from the gist of the present invention. For example, in the above-described embodiments, the case of employing the cancellation mechanisms 1 and 101 of the present invention as the transmission mechanism 3 configured to transmit the input from the shift lever device 2 to the automatic transmission has been described. However, the embodiments of the present invention are not limited thereto. The cancellation mechanisms 1 and 101 can be employed for the configuration of operating one mechanism as an input device while actuating the other mechanism (an output device), such as switching of a bonnet between an open state and a closed state and a coupling relationship between a steering and a steering lock.

Further, in the above-described embodiments, the case of applying the cancellation mechanisms 1 and 101 of the present invention to four-wheel vehicles has been described. However, the present invention is not limited thereto, and the cancellation mechanisms 1 and 101 of the present invention are applicable not only to two-wheel and three-wheel vehicles and but also to objects other than vehicles.

In addition, the configuration of providing the actuator at the body portion has been described in the above-described embodiments. Note, however, that the actuator may be provided at the rotary lever as long as the body portion and the rotary lever are switchable between the coupling state and the decoupling state.

Further, in the above-described embodiments, the configuration of returning, after the door is locked, the cancellation mechanisms 1 and 101 to the initial state (the actuators 24 and 112 are at the decoupling position) has been described. However, the configuration of the cancellation mechanism of the embodiments is not limited thereto, and for example, the configuration of returning to the initial state at the timing of vehicle stop may be employed.

The structural elements of the above-described embodiments may be optionally replaced with well-known elements without departing from the gist of the present invention.

### DESCRIPTION OF REFERENCE NUMERALS

- 1, 101: Cancellation mechanism
- 2: Shift lever device (input device)
- 15: Spindle
- 21: First body portion (body portion)
- 22, 111: Rotary lever
- 23: Second body portion (body portion)
- 24, 112: Actuator
- 52: Safety pin
- 71: Safety cam
- 73: Pin restrictor
- 110: Body portion

## Claims

1. A cancellation mechanism comprising:
a body portion attached to a rotatable spindle and connected to an output device via the spindle;
a rotary lever attached to the body portion to be rotatable about the spindle and configured to rotate in response to input from an input device; and
an actuator disposed on either one of the rotary lever or the body portion, and configured to move between a coupling position at which the rotary lever and the body portion are coupled together and a decoupling position at which coupling between the rotary lever and the body portion is canceled.

2. The cancellation mechanism according to claim 1, further comprising:
a safety pin provided extendable on a movement path from the coupling position to the decoupling position of the actuator, and positioned, when the actuator is at the coupling position, at a protruding position on the movement path to restrict movement of the actuator to the decoupling position.

3. The cancellation mechanism according to claim 2, further comprising:
a safety cam configured to contact the safety pin to position the safety pin at the protruding position.
